# EUROPEAN PATENT SPECIFICATION

(11) **EP 1 382 639 B1**
(45) Date of publication and mention of the grant of the patent: **14.11.2012**
(21) Application number: 03077282.6
(22) Date of filing: 16.07.2003
(51) Int. Cl.: C08L 25/06, C10G 2/00, C10G 45/58, C08L 91/00

(54) **Use of white oil as plasticizer in a polystyrene composition**
Verwendung eines Weissöls als Weichmacher in einer Polystyrolzusammensetzung
Utilisation d'huile blanche comme plastifiant dans des compositions de polystyrène

(30) Priority: 19.07.2002 EP 02016086
(43) Date of publication of application: 21.01.2004
(73) Proprietor: Shell Internationale Research Maatschappij B.V., 2596 HR Den Haag (NL)
(72) Inventor: Null, Volker Klaus, 21107 Hamburg (DE)

(56) References cited:
- WO-A-00/14184
- WO-A-02/070627
- GB-A- 1 125 499
- US-A- 2 619 478
- SULAIMAN N ET AL: "RESTRICTIVE EFFECT OF POLYSTYRENE DOMAINS ON SWELLING BEHAVIOUR OF STYRENE/BUTADIENE/STYRENE THERMOPLASTIC ELASTOMERS IN WHITE OIL PLASTICISERS" PLASTICS, RUBBER AND COMPOSITES PROCESSING AND APPLICATIONS, ESSEX, GB, vol. 27, no. 8, 1998, pages 356-361, XP001131972

## Description

The invention is directed to polystyrene composition comprising a medicinal or technical white oil as plasticizer.

Such a composition is described in US-A-2619478 as published in 1952. This publication describes a molding composition comprising of a thermoplastic polystyrene resin and a minor amount of a mineral oil for increasing the rate of flow of the resin during molding and facilitating removal of the molded products from molds in which they are formed. The mineral oils exemplified in this publication are substantially free of unsaturated compounds, or aromatic radicals, non-volatile at room conditions and at usual molding conditions. They boil at a temperature of 200 °C or higher at 760 mmHg. The illustrated mineral oils had a kinematic viscosity at 40 °C of about 10-44 mm²/sec.

At least since 1952 mineral oils have been used in polystyrene compositions as plasticizers. Examples of a more recent publication which mention mineral white oils as plasticizers in polystyrene compositions is for example EP-A-634444 as published in 1995.

If the polystyrene composition is to be used in food applications, for example coffee cups or food packaging, more stringent property requirements for the white oil platicizer exist. According to EU Directive 90/128/EEC based on the recommendation of the Scientific Committee for Food (SCF) of the European Commission and on the results of oral feeding studies carried out at the request of SCF by CONCAWE specifications for such oil have been set. The medicinal white oil must contain not more than 5% (w/w) mineral hydrocarbons with carbon numbers less than 25, kinematic viscosity at 100 °C not less than 8.5 mm²/s and an average molecular weight not less than 480 g/mol. The properties of a medicinal white oil are described by the following standards:
- European Pharmacopeia 3^{rd} Edition;
- US Pharmacopeia 23^{rd} edition;
- US FDA specification CFR §172.927 for "direct" food use;
- US FDA specification CFR §178.3620(a) for "indirect" food contact.
Medicinal white oils are for example described in General Textbook "Lubricant Base Oil and Wax Processing", Avilino Sequeira, Jr, Marcel Dekker Inc., New York, 1994, Chapter 6, pages 141-145. In table 6.24 on page 144 of this book it is found that Food Grade White Oils (medicinal white oils) having a kinematic viscosity at 100 °C of 9.45 mm2/sec and a pour point of -3 °C are prepared from a mineral oil feedstock containing high amounts of sulphur (>10.000 ppm S). It is clear that severe hydroprocessing is required to prepare such a high viscosity grade medicinal white oil, making such a product expensive.

It is an object of the present invention to provide an alternative plasticizer for use in a polystyrene composition.

This object is achieved by the following composition. Polystyrene composition or styrene copolymers composition comprising a medicinal or technical white oil as plasticizer, wherein the oil is a Fischer-Tropsch derived oil, according to claim 1.

Applicants have found that a Fischer-Tropsch derived oil can be used as platicizer in a polystyrene composition. The use of Fischer-Tropsch derived oils is advantageous because they are more easily obtainable when compared to the method based on mineral oils. A Further advantage is that the content of sulphur and nitrogen are nearly zero. Due to the nature of the Fischer-Tropsch process these sulphur and nitrogen contents are nearly zero. A next advantage is that the pour point of the Fischer-Tropsch derived oils are typically lower that the mineral derived white oils having comparable viscosity. This is advantageous because handling of the plasticizer oil at low temperature conditions will become less cumbersome for the polystyrene manufacturer.

The polystyrene composition is suitably a so-called clear polystyrene molding material. This composition is well known and is for example described in more detail in Ullmann's Encyclopedia of Industrial Chemistry, 5th completely revised ed. VCH New York, Vol. A21, pages 616-633.

The content of plasticizer in the polystyrene composition may range from 0.1 wt% to 10 wt% and more suitably from 2 to 5 wt%.

The medicinal white oil as derived from a Fischer-Tropsch process may have a kinematic viscosity at 100 °C (vK@100) between 2 and 30 mm²/sec. More preferably the vK@100 is above 7 and most preferably above 8.5 mm²/sec if the composition according to the invention is used for a food application. The upper limit for the vK@100 is preferably below 15 mm²/s because at higher viscosities the oil becomes less compatible with the polystyrene or styrene copolymer composition. For food applications the oil preferably has the properties as described above and 5%w boiling point greater than 391 °C. The Fischer-Tropsch derived oil preferably has a Saybolt colour of greater than +25 and preferably equal to +30. The content of polar compounds is preferably less than 1 wt% and the content of noncyclic isoparaffins is between 75 and 98 wt%. The ultra violet (UV) adsorption spectra values as measured according to ASTM D 2269 is preferably less than 0.70 in the 280-289 nm spectral band, less than 0.60 in the 290-299 nm spectral band, less than 0.40 in the 300-329 nm spectral band and less than 0.09 in the 330-380 nm spectral band as according to FDA 178.3620 (c). The pour point of the oil is preferably below -10 °C and more preferably below -15 °C. The CN number as measured according to IEC 590 is preferably between 15 and 30.

The above Fischer-Tropsch derived oil is preferably obtained by the following process. The preferred process comprises (1) a Fischer-Tropsch synthesis step, (2) a hydrocracking/hydroisomerisation step on (part of) the Fischer-Tropsch synthesis product followed by (3) a pour point reducing step of (a fraction of) the product of the hydroprocessing step. Either solvent or catalytic dewaxing may achieve reduction of pour point in step (3). The desired medicinal or technical white oil having the desired viscosity can be isolated from said dewaxed product by means of distillation. Optionally the oil is hydrofinished or subjected to an adsorption treatment in order to improve its colour. Examples of these process steps are illustrated for the below preferred embodiment.

The Fischer-Tropsch synthesis step may be performed according to the so-called commercial Sasol process, the commercial Shell Middle Distillate Process or by the non-commercial Exxon process. These and other processes are for example described in more detail in EP-A-776959, EP-A-668342, US-A-4943672, US-A-5059299, WO-A-9934917 and WO-A-9920720. Most of these publications also describe the above-mentioned hydroisomerisation/ hydrocracking step (2).

A preferred process in which high yields of medicinal or technical white oils having a vK@100 of greater than 7 mm²/sec can be obtained is by
(a) hydrocracking/hydroisomerisating a Fischer-Tropsch derived feed, wherein weight ratio of compounds having at least 60 or more carbon atoms and compounds having at least 30 carbon atoms in the Fischer-Tropsch derived feed is at least 0.2 and wherein at least 30 wt% of compounds in the Fischer-Tropsch derived feed have at least 30 carbon atoms,
(b) separating the product of step (a) into one or more lower boiling distillate fraction(s) and a higher boiling white oil precursor fraction,
(c) performing a pour point reducing step to white oil precursor fraction obtained in step (b), and
(d) isolating the white oil by distilling the product of step (c).

The relatively heavy Fischer-Tropsch derived feed as used in step (a) has at least 30 wt%, preferably at least 50 wt%, and more preferably at least 55 wt% of compounds having at least 30 carbon atoms. Furthermore the weight ratio of compounds having at least 60 or more carbon atoms and compounds having at least 30 carbon atoms of the Fischer-Tropsch derived feed is at least 0.2, preferably at least 0.4 and more preferably at least 0.55. The Fischer-Tropsch derived feed is preferably derived from a Fischer-Tropsch product which comprises a C₂₀+ fraction having an ASF-alpha value (Anderson-Schulz-Flory chain growth factor) of at least 0.925, preferably at least 0.935, more preferably at least 0.945, even more preferably at least 0.955.

The initial boiling point of the Fischer-Tropsch derived feed may range up to 400 °C, but is preferably below 200 °C. Preferably at least any compounds having 4 or less carbon atoms and any compounds having a boiling point in that range are separated from a Fischer-Tropsch synthesis product before the Fischer-Tropsch synthesis product is used as a Fischer-Tropsch derived feed in step (a). The Fischer-Tropsch derived feed as described in detail above will for the greater part comprise of a Fischer-Tropsch synthesis product, which has not been subjected to a hydroconversion step as defined according to the present invention. In addition to this Fischer-Tropsch product also other fractions may be part of the Fischer-Tropsch derived feed. Possible other fractions may suitably be any high boiling fraction obtained in step (b).

Such a Fischer-Tropsch derived feed is suitably obtained by a Fischer-Tropsch process, which yields a relatively heavy Fischer-Tropsch product. Not all Fischer-Tropsch processes yield such a heavy product. An example of a suitable Fischer-Tropsch process is described in WO-A-9934917 and in AU-A-698392. These processes may yield a Fischer-Tropsch product as described above.

The Fischer-Tropsch derived feed and the resulting waxy raffinate product will contain no or very little sulphur and nitrogen containing compounds. This is typical for a product derived from a Fischer-Tropsch reaction, which uses synthesis gas containing almost no impurities. Sulphur and nitrogen levels will generally be below the detection limits, which are currently 5 ppm for sulphur and 1 ppm for nitrogen

The hydrocracking/hydroisomerisation reaction of step (a) is preferably performed in the presence of hydrogen and a catalyst, which catalyst can be chosen from those known to one skilled in the art as being suitable for this reaction. Catalysts for use in step (a) typically comprise an acidic functionality and a hydrogenation/dehydrogenation functionality. Preferred acidic functionalities are refractory metal oxide carriers. Suitable carrier materials include silica, alumina, silica-alumina, zirconia, titania and mixtures thereof. Preferred carrier materials for inclusion in the catalyst for use in the process of this invention are silica, alumina and silica-alumina. A particularly preferred catalyst comprises platinum supported on a silica-alumina carrier. If desired, the acidity of the catalyst carrier may be enhanced by applying a halogen moiety, in particular fluorine, or a phosphorous moiety to the carrier. Examples of suitable hydrocracking/hydroisomerisation processes and suitable catalysts are described in WO-A-0014179, EP-A-532118 and the earlier referred to EP-A-776959.

Preferred hydrogenation/dehydrogenation functionalities are Group VIII metals, such a nickel, cobalt, iron, palladium and platinum. Preferred are the noble metal Group VIII members, palladium and more preferred platinum. The catalyst may comprise the more preferred noble metal hydrogenation/dehydrogenation active component in an amount of from 0.005 to 5 parts by weight, preferably from 0.02 to 2 parts by weight, per 100 parts by weight of carrier material. A particularly preferred catalyst for use in the hydroconversion stage comprises platinum in an amount in the range of from 0.05 to 2 parts by weight, more preferably from 0.1 to 1 parts by weight, per 100 parts by weight of carrier material. The catalyst may also comprise a binder to enhance the strength of the catalyst. The binder can be non-acidic. Examples are clays and other binders known to one skilled in the art.

In step (a) the feed is contacted with hydrogen in the presence of the catalyst at elevated temperature and pressure. The temperatures typically will be in the range of from 175 to 380 °C, preferably higher than 250 °C and more preferably from 300 to 370 °C. The pressure will typically be in the range of from 10 to 250 bar and preferably between 20 and 80 bar. Hydrogen may be supplied at a gas hourly space velocity of from 100 to 10000 N1/1/hr, preferably from 500 to 5000 N1/1/hr. The hydrocarbon feed may be provided at a weight hourly space velocity of from 0.1 to 5 kg/1/hr, preferably higher than 0.5 kg/1/hr and more preferably lower than 2 kg/1/hr. The ratio of hydrogen to hydrocarbon feed may range from 100 to 5000 Nl/kg and is preferably from 250 to 2500 Nl/kg.

The conversion in step (a) as defined as the weight percentage of the feed boiling above 370 °C which reacts per pass to a fraction boiling below 370 °C, is at least 20 wt%, preferably at least 25 wt%, but preferably not more than 80 wt%, more preferably not more than 65 wt%. The feed as used above in the definition is the total hydrocarbon feed fed to step (a), thus also including any optional recycle of the higher boiling fraction as obtained in step (b).

In step (b) the product of step (a) is preferably separated into one or more distillate fractions, a white oil precursor fraction having preferably a T10wt% boiling point of between 300 and 450 °C. A heavy fraction may be separated from the product of step (a) to adjust the resultant viscosity of the medicinal or technical white oil. If no heavy fraction is removed the kinematic viscosity at 100 °C of the white oil may be well above 15 mm²/sec. By adjusting the amount and cut point at which the said heavy fraction is separated from the effluent of step (a) medicinal white oils or technical white oils can be obtained having a kinematic viscosity at 100 °C ranging from 7 mm²/sec and preferably from 8.5 mm²/sec to 15 mm²/sec.

If a heavy fraction is separated then the T90wt% boiling point of the white oil precursor fraction will preferably be between 350 and 550 °C. The separation is preferably performed by means of a first distillation at about atmospheric conditions, preferably at a pressure of between 1.2-2 bara, wherein the gas oil product and lower boiling fractions, such as naphtha and kerosine fractions, are separated from the higher boiling fraction of the product of step (a). If a high boiling fraction is removed from the product of step (a) as described above, then this higher boiling fraction, of which suitably at least 95 wt% boils above 370 °C, is further separated in a vacuum distillation step wherein a vacuum gas oil fraction, the white oil precursor fraction and the optional higher boiling fraction are obtained. The vacuum distillation is suitably performed at a pressure of between 0.001 and 0.1 bara.

In step (c) the white oil precursor fraction obtained in step (b) is subjected to a pour point reducing treatment. With a pour point reducing treatment is understood every process wherein the pour point of the base oil is reduced by more than 10 °C, preferably more than 20 °C, more preferably more than 25 °C. The pour point reducing treatment is preferably performed by means of a so-called catalytic dewaxing process.

The catalytic dewaxing process can be performed by any process wherein in the presence of a catalyst and hydrogen the pour point of the white oil precursor fraction is reduced as specified above. Suitable dewaxing catalysts are heterogeneous catalysts comprising a molecular sieve and optionally in combination with a metal having a hydrogenation function, such as the Group VIII metals. Molecular sieves, and more suitably intermediate pore size zeolites, have shown a good catalytic ability to reduce the pour point of the white oil precursor fraction under catalytic dewaxing conditions. Preferably the intermediate pore size zeolites have a pore diameter of between 0.35 and 0.8 nm. Suitable intermediate pore size zeolites are mordenite, ZSM-5, ZSM-12, ZSM-22, ZSM-23, SSZ-32, ZSM-35 and ZSM-48. Another preferred group of molecular sieves are the silica-aluminaphosphate (SAPO) materials of which SAPO-11 is most preferred as for example described in US-A-4859311. ZSM-5 may optionally be used in its HZSM-5 form in the absence of any Group VIII metal. The other molecular sieves are preferably used in combination with an added Group VIII metal. Suitable Group VIII metals are nickel, cobalt, platinum and palladium. Examples of possible combinations are Ni/ZSM-5, Pt/ZSM-23, Pd/ZSM-23, Pt/ZSM-48 and Pt/SAPO-11. Further details and examples of suitable molecular sieves and dewaxing conditions are for example described in WO-A-9718278, US-A-5053373, US-A-5252527 and US-A-4574043.

The dewaxing catalyst suitably also comprises a binder. The binder can be a synthetic or naturally occurring (inorganic) substance, for example clay, silica and/or metal oxides. Natural occurring clays are for example of the montmorillonite and kaolin families. The binder is preferably a porous binder material, for example a refractory oxide of which examples are: alumina, silica-alumina, silica-magnesia, silica-zirconia, silica-thoria, silica-beryllia, silica-titania as well as ternary compositions for example silica-alumina-thoria, silica-alumina-zirconia, silica-alumina-magnesia and silica-magnesia-zirconia. More preferably a low acidity refractory oxide binder material which is essentially free of alumina is used. Examples of these binder materials are silica, zirconia, titanium dioxide, germanium dioxide, boria and mixtures of two or more of these of which examples are listed above. The most preferred binder is silica.

A preferred class of dewaxing catalysts comprise intermediate zeolite crystallites as described above and a low acidity refractory oxide binder material which is essentially free of alumina as described above, wherein the surface of the aluminosilicate zeolite crystallites has been modified by subjecting the aluminosilicate zeolite crystallites to a surface dealumination treatment. A preferred dealumination treatment is by contacting an extrudate of the binder and the zeolite with an aqueous solution of a fluorosilicate salt as described in for example US-A-5157191 or WO-A-0029511. Examples of suitable dewaxing catalysts as described above are silica bound and dealuminated Pt/ZSM-5, silica bound and dealuminated Pt/ZSM-23, silica bound and dealuminated Pt/ZSM-12, silica bound and dealuminated Pt/ZSM-22, as for example described in WO-A-0029511 and EP-B-832171.

Catalytic dewaxing conditions are known in the art and typically involve operating temperatures in the range of from 200 to 500 °C, suitably from 250 to 400 °C, hydrogen pressures in the range of from 10 to 200 bar, preferably from 40 to 70 bar, weight hourly space velocities (WHSV) in the range of from 0.1 to 10 kg of oil per litre of catalyst per hour (kg/l/hr), suitably from 0.2 to 5 kg/l/hr, more suitably from 0.5 to 3 kg/l/hr and hydrogen to oil ratios in the range of from 100 to 2,000 litres of hydrogen per litre of oil. By varying the temperature between 315 and 375 °C at between 40-70 bars, in the catalytic dewaxing step it is possible to prepare base oils having different pour point specifications varying from suitably -10 to -60 °C.

In step (d) the dewaxed effluent of step (c), optionally after flashing off some low boiling compounds, is separated into one or more low viscosity base oil products and the white oil.

In order to improve the colour properties of this white oil fraction as obtained above a final finishing treatment may be performed. Examples of suitable finishing treatments are so-called sulfuric acid treating processes, hydrofinishing processes and adsorption processes. Sulfuric acid treating is for example described in General Textbook "Lubricant Base Oil and Wax Processing", Avilino Sequeira, Jr, Marcel Dekker Inc., New York, 1994, Chapter 6, pages 226-227.

Hydrofinishing is suitably carried out at a temperature between 180 and 380 °C, a total pressure of between 10 to 250 bar and preferably above 100 bar and more preferably between 120 and 250 bar. The WHSV (Weight hourly space velocity) ranges from 0.3 to 2 kg of oil per litre of catalyst per hour (kg/l.h).

The hydrogenation catalyst is suitably a supported catalyst comprising a dispersed Group VIII metal. Possible Group VIII metals are cobalt, nickel, palladium and platinum. Cobalt and nickel containing catalysts may also comprise a Group VIB metal, suitably molybdenum and tungsten. Suitable carrier or support materials are low acidity amorphous refractory oxides. Examples of suitable amorphous refractory oxides include inorganic oxides, such as alumina, silica, titania, zirconia, boria, silica-alumina, fluorided alumina, fluorided silica-alumina and mixtures of two or more of these.

Examples of suitable hydrogenation catalysts are nickel-molybdenum containing catalyst such as KF-847 and KF-8010 (AKZO Nobel) M-8-24 and M-8-25 (BASF), and C-424, DN-190, HDS-3 and HDS-4 (Criterion); nickel-tungsten containing catalysts such as NI-4342 and NI-4352 (Engelhard) and C-454 (Criterion); cobalt-molybdenum containing catalysts such as KF-330 (AKZO-Nobel), HDS-22 (Criterion) and HPC-601. (Engelhard). Preferably platinum containing and more preferably platinum and palladium containing catalysts are used. Preferred supports for these palladium and/or platinum containing catalysts are amorphous silica-alumina. Examples of suitable silica-alumina carriers are disclosed in WO-A-9410263. A preferred catalyst comprises an alloy of palladium and platinum preferably supported on an amorphous silica-alumina carrier of which the commercially available catalyst C-624 of Criterion Catalyst Company (Houston, TX) is an example.

The white oil as obtained by the process as described above, including the optional hydrogenation step, may also be contacted with an adsorbent to further increase the colour properties. Examples of suitable heterogeneous adsorbents are active carbon, zeolites, for example natural faujasite, or synthetic materials such as ferrierite, ZSM-5, faujasite, mordenite, metal oxides such as silica powder, silica gel, aluminum oxyde and various clays, for example Attapulgus clay (hydrous magnesium-aluminium silicate), Porocel clay (hydrated aluminium oxide). A preferred adsorbent is activated carbon.

In general, activated carbon is a microcrystalline, nongraphitic form of carbon, which has been processed to develop internal porosity due to which it has a large surface area. Activated carbons which have been found particularly suitable, are those having a surface area (N₂, BET method) in the range from 500 to 1500 m²/g, preferably from 900 to 1400 m²/g, and a Hg pore volume in the range from 0.1 to 1.0 ml/g, preferably from 0.2 to 0.8 ml/g. With the expression "Hg pore volume" is meant the pore volume as determined by mercury porosimetry. Very good results have been obtained with activated carbons which additionally have a micropore size distribution of 0.2 to 2 nm with an average of 0.5 to 1 nm, a pore size distribution (Hg porosimetry) in the range from 1 to 10,000 nm, preferably from 1 to 5,000 nm, and a total pore volume as determined by nitrogen porosimetry in the range from 0.4 to 1.5 ml/g, preferably from 0.5 to 1.3 ml/g. Other preferred physical characteristics include an apparent bulk density of from 0.25 to 0.55 g/ml, a particle size of from 0.4 to 3.5 nm, preferably 0.5 to 1.5 nm, and a bulk crushing strength of at least 0.8 MPa, preferably at least 1.0 MPa. Examples of suitable commercially available activated carbons include Chemviron type, Chemviron F-400 (FILTRASORB 400), DARCO GCL 8*30 and DARCO GCL 12*40 (FILTRASORB and DARCO are trade marks).

The activated carbon used in the process is preferably dry activated carbon. This means that the water content of the activated carbon should be less than 2% by weight, preferably less than 1% by weight and more preferably less than 0.5% by weight, based on total weight of activated carbon. This usually means that the activated carbon has to be dried first before application in the process. Drying can be either be performed ex situ or in situ via conventional drying procedures known in the art. Examples of suitable drying procedures are those wherein activated carbon is dried at a temperature in the range of from 100 to 500°C for 1 to 48 hours in a nitrogen atmosphere. In case of applying a fixed bed of activated carbon, in situ drying the activated carbon, i.e. drying after the activated carbon has been packed into a bed, is preferred.

The conditions (temperature, pressure, space velocity) under which the bottom product is contacted with the activated carbon may vary within broad ranges in order to still attain the desired white oil quality. Temperatures in the range of from 20 to 300 °C, preferably 30 to 200 °C, more preferably 40 to 150 °C, have been found to be suitable in this respect. The operating pressure of the process according to the present invention is not particularly critical and may be in the range of from 1 to 200 bar, preferably 1 to 100 bar, most preferably 1 to 20 bar. A suitable weight hourly space velocity has been found to be in the range of from 0.2 to 25 kg/l/hr, preferably from 0.5 to 10 kg/l/hr and more preferably from 1 to 5 kg/l/hr.

The invention will be illustrated by the following examples.

### Example 1

A bottom distillate fraction having the properties as listed in Table 1 (Feed 1) and as obtained by performing the steps (a)-(d) as described above on a Fischer-Tropsch derived feed was used to prepare a medicinal white oil. The Fischer-Tropsch derived feed used in step (a) was the C₅-C₇₅₀ °C⁺ fraction of the Fischer-Tropsch product, as obtained in Example VII using the catalyst of Example III of WO-A-9934917. The feed contained about 60 wt% C₃₀⁺ product. The ratio C₆₀⁺/C₃₀⁺ was about 0.55.

**Table 1**

| | Feed 1 |
|---|---|
| Kinematic viscosity at 100 °C | 11.11 |
| Density (d20/4) | 831.2 |
| 5%w boiling Pt ( °C) | 479 |
| Pour point ( °C) | -45 |
| ASTM colour (ASTM D 1500) | L3.0 |

The bottom distillate fraction was continuously passed over a bed of dry coarse particles of "Chemviron" charcoal type F-400 in upflow mode at 85 °C for about 100 hours, at a rate of 1 g/g.h (about 0.4 l/l.h.).

The UV adsorption values and Saybolt colour are listed in Table 2. The results in Table 2 show that a medicinal white oil can be obtained from a Fischer-Tropsch derived bottom distillate fraction.

**Table 2**

| Property-fraction: | UV range 280-289 nm | 290-299 nm | 300-329 nm | 330-380 nm | Saybolt colour |
|---|---|---|---|---|---|
| Medicinal white oil specification **(maximum values) | 0.70 | 0.60 | 0.40 | 0.09 | +30 |
| Feed | 5.0 | 4.6 | 5.0 | 5.4 | Too dark to use Saybolt |
| Oil as obtained in Example 1 | 0.12 | 0.10 | 0.06 | 0.02 | +25 |

| | | | | | |
|---|---|---|---|---|---|
| * according to FDA 178.3620 as measured by ASTM 2269 ** according to FDA 178.3620 as measured by ASTM 2269 | | | | | |

## Claims

1. Polystyrene composition or styrene copolymers composition comprising a white oil as plasticizer, wherein the white oil is a Fischer-Tropsch derived oil, wherein the white oil contains between 75 and 98 wt% of non-cyclic isoparaffins.

2. Composition according to claim 1, wherein the Fischer-Tropsch derived white oil has a content of mineral hydrocarbons with carbon numbers less than 25 of not more than 5% (w/w) and an average molecular weight not less than 480 g/mol.

3. Composition according to claim 1 or 2, wherein the composition comprises between 2 and 5 wt% of the Fischer-Tropsch derived oil.

## Patentansprüche

1. Polystyrolzusammensetzung oder Styrolcopolymerzusammensetzung, umfassend ein Weißöl als Weichmacher, wobei das Weißöl ein nach dem Fischer-Tropsch-Verfahren gewonnenes Öl ist, wobei das Weißöl zwischen 75 und 98 Gew.-% nichtzyklische Isoparaffine enthält.

2. Zusammensetzung nach Anspruch 1, wobei das nach dem Fischer-Tropsch-Verfahren gewonnene Weißöl einen Anteil von mineralischen Kohlenwasserstoffen mit Kohlenstoffzahlen unter 25 von nicht mehr als 5% (w/w) und ein durchschnittliches Molekulargewicht von nicht weniger als 480 g/mol besitzt.

3. Zusammensetzung nach Anspruch 1 oder 2, wobei die Zusammensetzung zwischen 2 und 5 Gew.-% des nach dem Fischer-Tropsch-Verfahren gewonnenen Öls umfasst.

## Revendications

1. Composition de polystyrène ou composition de copolymères de styrène, comprenant une huile blanche comme plastifiant, dans laquelle l'huile blanche est une huile tirée de la réaction de Fischer-Tropsch, dans laquelle l'huile blanche contient entre 75 et 98 % en poids d'isoparaffine non cyclique.

2. Composition selon la revendication 1, dans laquelle l'huile blanche tirée de la réaction de Fischer-Tropsch a une teneur en hydrocarbures minéraux ayant un nombre d'atomes de carbone de moins de 25 à pas plus de 5 % (en p/p) et un poids moléculaire moyen qui n'est pas inférieur à 480 g/mole.

3. Composition selon la revendication 1 ou la revendication 2, dans laquelle la composition comprend entre 2 et 5 % en poids de l'huile tirée de la réaction de Fischer-Tropsch.
